Europäisches Patentamt

(19) European Patent Office

Office européen des brevets

(11) Publication number: **0 328 222 B1**

(12) **EUROPEAN PATENT SPECIFICATION**

(45) Date of publication of patent specification :
22.05.91 Bulletin 91/21

(51) Int. Cl.⁵ : **A01K 43/00**

(21) Application number : **89200302.1**

(22) Date of filing : **08.02.89**

(54) **Egg-washer.**

(30) Priority : **09.02.88 NL 8800310**

(43) Date of publication of application :
**16.08.89 Bulletin 89/33**

(45) Publication of the grant of the patent :
**22.05.91 Bulletin 91/21**

(84) Designated Contracting States :
**AT BE CH DE ES FR GB GR IT LI LU NL SE**

(56) References cited :
**GB-A- 1 095 919**
**US-A- 2 301 931**
**US-A- 2 673 361**
**US-A- 3 440 094**

(73) Proprietor : **Derksen, Johannes Gerhardus Maria**
**Kerkhuisstraat 20**
**NL-7037 DE Beek (Gem. Bergh) (NL)**

(72) Inventor : **Derksen, Johannes Gerhardus Maria**
**Kerkhuisstraat 20**
**NL-7037 DE Beek (Gem. Bergh) (NL)**

(74) Representative : **de Bruijn, Leendert C. et al**
**Nederlandsch Octrooibureau**
**Scheveningseweg 82 P.O. Box 29720**
**NL-2502 LS 's-Gravenhage (NL)**

## Description

The invention relates to an egg-washer, comprising a conveyor belt, the top side of which has a sloping belt part which, viewed in the normal direction of conveyance, moves upwards, a tank for filling with cleaning liquid, through which a part of the top side of the conveyor belt runs, and one or more motor-driven cleaning elements, such as brushes, which are placed above a part of the top side of the conveyor belt, in such a way that they can clean eggs conveyed on the conveyor.

Such an egg-washer is known from US-A-2673361.

Some of the eggs discharged on a conveyor belt from laying houses are soiled. It is common practice for these soiled eggs to be picked out by hand and placed in a basket which is immersed in water at a temperature between about 30 and 42°C. It has been found that too high a percentage of the eggs acquire hair cracks during this washing process.

In the case of the known egg-washer the conveyor belt is provided with carriers and each egg is between two carriers. The brushes are fixed on a rotary shaft. Such a design is relatively complex and expensive.

The object of the invention is to avoid the above-mentioned disadvantages and produce an egg-washer of simpler design, in which eggs can be cleaned quickly in relatively large quantities, without hair cracks arising in the eggshells.

According to the invention, the egg-washer is to this end characterized in that the cleaning elements are placed above the above-mentioned sloping belt part which is in the liquid tank, and are connected by means of a transmission to an eccentric for moving the cleaning elements along such a closed path that the bottom route of the movement path of said elements runs approximately parallel to the above-mentioned sloping belt part and is directed upwards at an angle.

The top side of the conveyor belt preferably has two parts sloping towards a common low part. The above-mentioned upward moving part forms one of these two sloping parts. The two sloping belt parts form a trough which is placed in a tank containing water at a temperature of about 30 to 42°C. The adhering dirt, which has been pre-softened in the heated water, is removed from the eggshells by the cleaning elements. A heating element will be provided in the tank to heat the water to the desired temperature and maintain it at that temperature.

The eggs must not roll too quickly along the downward-sloping part. Means such as a brush or gauze, which have a braking effect on the downward-rolling eggs, are therefore provided above said sloping part.

The invention will now be explained in greater detail with reference to the figures, in which an example of an embodiment is shown.

Fig. 1 shows a longitudinal section of an egg-washer according to the invention.

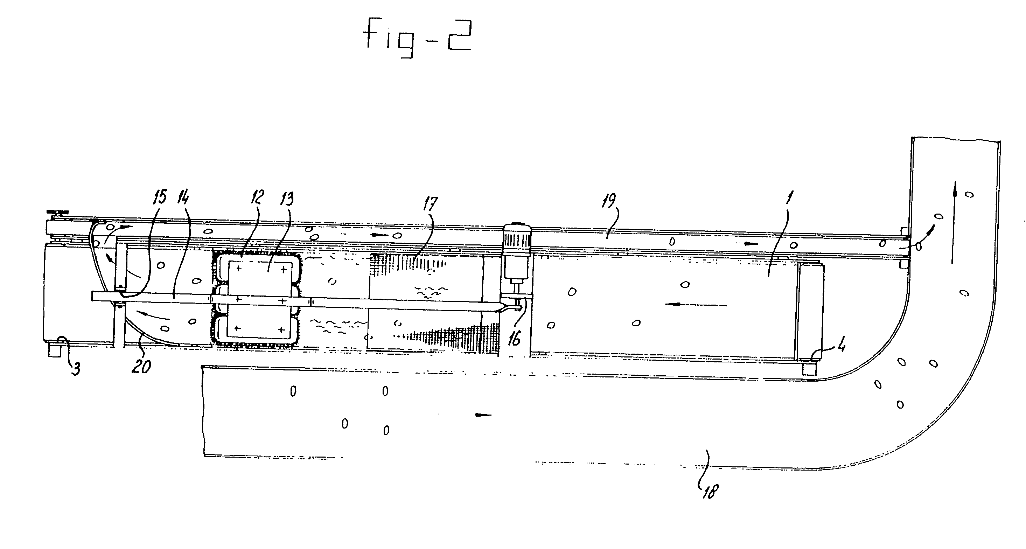

Fig. 2 shows a top view of the egg-washer, with egg feed conveyor.

The egg-washer shown comprises a conveyor belt 1 with a pulley 3 driven by a motor 2 and a non-driven pulley 4.

In the top side of the conveyor a thin spoke 5 forms a lowered part containing two parts 6, 7 sloping down towards the lowest point. The trough thus formed is in a tank, formed by two sloping plates 8, 9 and side walls. The tank contains water which is maintained at a temperature between about 30 and about 42°C by a thermostatically controlled heating element 10.

In order to create space for the lowered part of the top side of the conveyor and the tank, the bottom side of the conveyor is pressed down by a roller 11.

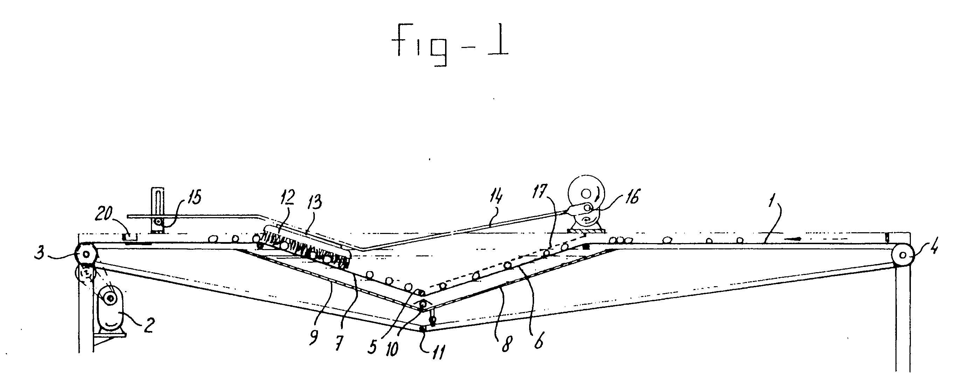

Immediately above the sloping belt part 7, which during operation moves upwards at an angle from the lowest point (see arrow in Fig. 1 for direction of conveyance) are a number of brushes 12 fixed by means of a plate 13 to a bar 14, one end of which rests on a roller 15, while the other end is fastened to an eccentric 16.

The brushes move along such a closed path when the eccentric is driven that in the lowest part of their movement they are moved upwards approximately parallel to the sloping belt part 7.

A brush or a piece of gauze 17 is disposed over the other sloping part 6 ; only the top edge thereof is fixed.

Two conveyors are added to the washing plant : a feed conveyor 18, with which the eggs are fed in from the laying houses, and a discharge conveyor 19, with which washed eggs are conveyed back from the discharge end of the washer to the conveyor 18. Only the soiled eggs are selected by hand from the eggs brought in on the conveyor 18 and are placed on the part of the top side of the conveyor 1 which extends between the pulley 4 and the sloping belt part 6.

The conveyor 18 conveys the eggs to, for example, a packing machine. A guide element 20 is provided above the conveyor 1 to convey the washed eggs onto the discharge conveyor 19.

The plant works as follows :
The conveyor belt 1 runs, for example, at a speed of 1 m per minute. The soiled eggs placed on the conveyor are prevented from rolling downwards too fast on the sloping belt part 6 by the gauze 17 (or brush) resting loosely on the eggs. The resistance exerted by the water also plays a role here. The eggs are carried along by the upgoing part 7 of the belt, and the dirt pre-softened in the heated water is removed by the moving soft brushes. A cleaning product such as soda or a specific washing agent for washing eggs can be dissolved in the water. The temperature of the water must not be higher than that of the eggs, in order to ensure that dirty water does not penetrate into the porous shell as a result of contraction.

The plant according to the invention is found to be very satisfactory at a relatively high capacity (depending on the width of the conveyor 1, for example, 2,000 eggs per hour). Little or no damage occurs to the eggs.

Various modifications of the egg-washer described and illustrated are possible within the scope of the invention. What is important is that the eggs should move upwards on a conveyor belt and during this upward conveyance are in water which has a cleansing action and braking effect against rolling backwards, while brushes brush the eggs clean during this conveyance. Other cleaning elements with the above-mentioned two functions can be used instead of brushes.

## Claims

1. Egg-washer, comprising a conveyor belt (1), the top side of which has a sloping belt part (7) which, viewed in the normal direction of conveyance, is directed upwards, a tank for filling with cleaning liquid, through which a part of the top side of the conveyor belt (1) runs, and one or more motor-driven cleaning elements (12), such as brushes, which are placed above a part of the top side of the conveyor belt (1), in such a way that they can clean the eggs conveyed on the conveyor, characterized in that the cleaning elements (12) are placed above the above-mentioned upwardly sloping belt part (7) which is in the liquid tank, and are connected by means of a transmission to an eccentric (16) for moving the cleaning elements (12) along such a closed path that the bottom route of the movement path of said cleaning elements runs approximately parallel to the above-mentioned upwardly sloping belt part and is directed upwards at an angle.

2. Egg-washer according to Claim 1, characterized in that the top side of the conveyor belt also has a sloping belt part (6) which, viewed in the normal direction of conveyance, is directed downwards, to hereby above the above-mentioned sloping belt part (6) which, viewed in the normal direction of conveyance, is directed downwards, provision is made for means such as a brush or gauze (17) which have a braking effect on the downward-rolling eggs.

## Ansprüche

1. Eierwaschanlage, enthaltend eine Förderbahn (1), deren Oberseite ein geneigtes Bahnteil (7) aufweist, das in der normalen Förderrichtung gesehen aufwärts gerichtet ist, ein Tank zum Füllen mit Reinigungsflüssigkeit, durch welchen ein Teil der Oberseite der Firderbahn (1) läuft, sowie ein oder mehrere von einem Motor angetriebene Säuberungselemente (12), wie z.B. Bürsten, die oberhalb eines Teils der Oberseite der Förderbahn (1) derart angeordnet sind, daß sie die auf dem Förderer transportierten Eier säubern konnen, **dadurch gekennzeichnet**, daß die Säuberungselemente (12) oberhalb des oben erwähnten aufwärtsgeneigten Bandteils (7), das sich in dem Flüssigkeitstank befindet, angeordnet sind und vermittels einer Transmission mit einem Exzenter (16) verbunden sind, der die Säuberungselemente (12) entlang eines solchen geschlossenen Wegs bewegt, daß die Bodenlinie des Bewegungsweges der genannten Säuberungselemente annähernd parallel verläuft zu dem oben erwähnten aufwärts geneigten Bandteil und aufwärts in einem Winkel gerichtet ist.

2. Eierwaschanlage nach Anspruch 1, dadurch gekennzeichnet, daß die Oberseite der Förderbahn weiterhin ein geneigtes Bandteil (6) enthält, das in der normalen Förderrichtung gesehen abwärts gerichtet ist, wodurch oberhalb des oben erwähnten geneigten Bandteils (6), das in der normalen Förderrichtung gesehen, abwärts gerichtet ist, wodurch Einrichtungen vorgesehen werden können, wie z.B. eine Bürste oder ein Gewebe (17), das eine Bremswirkung auf die abwärtsrollenden Eier ausübt.

## Revendications

1. Machine à laver les oeufs comprenant une bande transporteuse (1), dont le brin supérieur comporte une partie de bande en pente (7) qui, vue dans le sens normal de transport, est dirigée vers le haut, un réservoir destiné à être rempli de liquide de nettoyage à travers lequel passe une partie du brin supérieur de la bande transporteuse (1), et un ou plusieurs éléments de nettoyage (12) actionnés par moteur, tels que des brosses, qui sont disposés au-dessus d'une partie du brin supérieur de la bande transporteuse de telle sorte qu'ils puissent nettoyer les oeufs transportés sur le transporteur, caractérisée en ce que les éléments de nettoyage (12) sont placés au-dessus de la partie de bande en pente vers le haut précitée (7) qui se trouve dans le réservoir de liquide, et sont reliés au moyen d'une transmission à un excentrique (16) déplaçant les éléments de nettoyage (12) le long d'une trajectoire fermée telle que le trajet inférieur de la trajectoire de déplacement desdits éléments de nettoyage s'étend approximativement parallèlement à la partie de bande en pente vers le haut précitée et est dirigée vers le haut selon un certain angle.

2. Machine à laver les oeufs conforme à la revendication 1, caractérisée en ce que le brin supérieur de la bande transporteuse comporte aussi une partie de bande en pente (6) qui, vue dans le sens normal de transport, est dirigée vers le bas, de sorte que au-dessus de la partie de bande en pente précitée (6) qui, vue dans le sens normal de transport, est dirigée vers le bas, il est prévu des moyens tels qu'une brosse ou une gaze métallique (17) ayant un effet de freinage sur les oeufs roulant vers le bas.

Fig-1

EP 0 328 222 B1

Fig-2